# EUROPEAN PATENT SPECIFICATION

(11) **EP 4 559 317 B1**
(45) Date of publication and mention of the grant of the patent: **17.06.2026**
(21) Application number: 23730569.3
(22) Date of filing: 16.03.2023
(51) Int. Cl.: A21D 2/26, A21D 2/36, A23L 33/135, A23L 33/14, A23L 33/195, A21D 13/045

(54) **POSTBIOTIC FOOD ADDITIVE**
POSTBIOTISCHER LEBENSMITTELZUSATZSTOFF
ADDITIF ALIMENTAIRE POSTBIOTIQUE

(30) Priority: 23.03.2022 ES 202230258
(43) Date of publication of application: 28.05.2025
(73) Proprietor: Signifer S.L., 28002 Madrid (ES)
(72) Inventor: GUARDIA ALBA, María Jesús, 18198 Huetor Vega (ES)
(74) Representative: Padial Martinez, Ana Belen
(86) International application number: PCT/IB2023/000138
(87) International publication number: WO 2023/180805

(56) References cited:
- WO-A1-01/85186
- ES-A1- 2 783 885
- US-A1- 2009 232 785
- US-A1- 2013 115 334
- US-A1- 2016 192 689
- US-A1- 2021 023 145
- GELSKI JEFF: "Heat-stable postbiotics an option for baked goods", BAKE MAGAZINE, 30 December 2021 (2021-12-30), pages 1 - 5, XP093060021, Retrieved from the Internet <URL:https://www.bakemag.com/articles/15577-heat-stable-postbiotics-an-option-for-baked-goods> [retrieved on 20230703]
- LAU SIEW WEN ET AL: "Sourdough Microbiome Comparison and Benefits", MICROORGANISMS, vol. 9, no. 7, 23 June 2021 (2021-06-23), pages 1355, XP093074708, DOI: 10.3390/microorganisms9071355
- ANONYMOUS: "The Sourdough Microbiome", 26 June 2020 (2020-06-26), XP093074711, Retrieved from the Internet <URL:https://asm.org/Articles/2020/June/The-Sourdough-Microbiome> [retrieved on 20230817]

## Description

### TECHNICAL FIELD OF THE INVENTION

The present invention falls within the technical field of bakery, pastry and confectionery foodstuffs, especially those obtained from sourdough based on cereal flours, such as bread, pizzas, biscuits such as muffins, cupcakes, cakes, etc., and to food additives and cereal-based food compositions for these foodstuffs.

### PRIOR ART PRIOR TO THE INVENTION

There are many cereal flour-based foodstuffs, including foodstuffs made from fermented cereal flour-based doughs, which are given a certain shape and baked in an oven. Such products are, for example, bread, pizzas, biscuits such as muffins, cupcakes, shortbread, cakes, etc.

A leavened dough is obtained from an initial mixture comprising as basic ingredients cereal flour, water and/or an aqueous liquid, and one or more leavening agents, in particular yeasts such as *Saccharomyces cerevisiae, Lactobacillus plantarum, L. delbrueckii,* and *L. sanfrancisco.* The mixture may comprise one or more additional ingredients such as spices, salt, milk, eggs, foodstuffs such as chopped vegetables such as chopped onions and garlic, chopped potatoes, chopped nuts, seeds, chopped roasted bacon, chopped fruits, chopped dried fruits, nuts, as well as additives such as sugar, preservatives, flavourings, fats.

The initial mixture is mixed and kneaded to obtain a kneaded mixture with a good mixing of the ingredients and the desired consistency, and the kneaded dough is left to rest at a suitable temperature for a certain period of time. During this resting stage, the starch and sugars in the flour are metabolised by the leavening agents in a metabolic process which leads to alcoholic fermentation resulting in the formation of ethanol and carbon dioxide in the form of gas which is released and causes the kneaded dough to swell and increase in volume, resulting in sourdough. The high baking temperature destroys the leavening agents.

The leavened dough is shaped into its final form and baked, resulting in the baked food product, which is left to cool at room temperature or refrigerated.

The human large intestine is colonised by trillions of microorganisms (grouped in about 1000 different species) that make up a very complex ecosystem called the human gut microbiota. Numerous studies have highlighted the important role of the gut microbiota in maintaining correct homeostasis and how variations in the microbiota population can lead to pathological states that modify the homeostatic balance. These alterations of the intestinal microbial balance, called dysbiosis, can be due to dietary, physical, infectious and other habits of individuals. The gut microbiota contributes to the trophic functions of the gut (production of fermentation products and vitamins used by enterocytes), stimulates the immune system, supports the gastrointestinal tract, transforms/excretes toxic substances, protects the host against invasion by pathogenic species, regenerates and preserves the intestinal barrier, modulates intestinal motility, etc.

It is known that the consumption of prebiotic, probiotic and postbiotic products, by preventing dysbiosis of the microbiota, can positively influence the composition of the microbiota and thus human health.

In general, postbiotics include bacterial metabolic by-products such as bacteriocins, organic acids, ethanol, diacetyl, acetaldehydes and hydrogen peroxide, but it is also true that certain heat-killed probiotics retain important bacterial structures that can exert biological activity in the host. Postbiotics are non-toxic, non-pathogenic and resistant to hydrolysis by mammalian enzymes, as these are non-viable bacterial products or metabolic by-products of probiotics [Islam SU. CLINICAL USES OF PROBIOTICS. Medicine (Baltimore) 2016;95:1e5]. Furthermore, recent studies suggest that these metabolic products may have more beneficial effects than the probiotic microorganisms that produce them. Postbiotics are soluble products or by-products secreted by live microorganisms or released after lysis of probiotic species that exert metabolic and/or immunomodulatory effects. These by-products offer physiological benefits to the host by providing bioactive molecules including short-chain fatty acids (SCFA), enzymes, peptides, peptidoglycan derivatives, muropeptides, endo- and exo- polysaccharides, cell surface proteins, vitamins, and organic acids (Taverniti, Simone Guglielmetti The immunomodulatory properties of probiotic microorganisms beyond their viability (ghost probiotics: proposal of paraprobiotic concept) Valentina. Genes Nutr (2011) 6:261-274). Functional foods have been known for years. Functional foods are considered to be foods that are consumed as part of a normal diet and contain biologically active ingredients, which offer health benefits beyond basic nutrition.

It is known that cereal flour-based food products such as baked goods obtained from sourdough are generated postbiotically from the metabolic activity of the probiotic microorganisms present, during the fermentation of the kneaded dough and the deactivation of at least a large part of these micro-organisms due to the baking of the kneaded dough so that the baked food product comprises postbiotics comprising non-viable probiotic micro-organisms and the metabolites previously produced by these micro-organisms during the fermentation of the kneaded dough. However, although bakery and confectionery foods are probably the most widespread and important foods worldwide, the problem is that few functional bakery and confectionery foods exist in the state of the art. The patent document ES2783885 discloses a food supplement being a mixture of dry microbial lysates comprising: 30% to 70% by volume of dry microbial lysates from cultures of strains of the genus Saccharomyces, 10% to 30% by volume of dry microbial lysates from cultures of strains of the genus Lactobacillus, 10% to 30% by volume of dry microbial lysates from cultures of strains of the genus Bacillus, 3% to 10% by volume of dry microbial lysates from cultures of strains of the genus Streptococcus, and 3% to 10%by volume of dry microbial lysates from cultures of strains of the genus Bifidobacterium. The patent document US 2009/232785 discloses compositions administered orally comprising probiotic inactivated micro-organisms for cosmetic use which may also be used in food products. The patent document US 2021/023145 discloses compositions comprising living and non-living micro-organisms that can be used in food products. The patent document US 2016/192689 discloses a functional food composition comprising prebiotics. The patent document WO 01/85186 discloses nutritional compositions containing inactivated or dead probiotics. The article "Heat-stable postbiotics an option for baked goods" discloses the use of postbiotics for preparing baked foods.

It was therefore an object to develop such functional foods based on cereal flour, such as bakery products, which are economical in terms of ingredients, equal in terms of organoleptic properties, easy to prepare and fully integrable in conventional manufacturing processes, safe in terms of additional ingredients used to convert bakery products into functional foods.

### DESCRIPTION OF THE INVENTION

The object of the present invention is to solve the problem inherent in the prior art by means of a postbiotic food additive for cereal-based food products such as bakery products, a food composition based on cereal flour or chickpea flour for preparing such food products, and a food product based on cereal flour comprising the food composition. According to the invention, the postbiotic food additive for bakery and confectionery products comprises a mixture of lysates of probiotic microorganisms, and is characterised in that the mixture of lysates comprises lysates of cultures of the following microorganisms:
0.3-6% by weight of lysates from *Bacillus licheniformis* with CFU/100g 6.00E+10;
0.3-6% by weight of lysates from *Bacillus pumilus* with CFU/100g 4.50E+10;
0.3-6% by weight of lysates from *Bacillus subtilis* with CFU/100g 6.00E+10;
2.5-15% by weight of lysates from *Bifidobacterium animalis subsp. lactis* with CFU/100g 5.00E+11;
0.8-8% by weight of lysates from *Lactobacillus acidophilus* with CFU/100g 8.00E+10;
0.8-8% by weight of lysates from *Lactobacillus fermentum* with CFU/100g with CFU/100g 8.00E + 10;
1.5-6% by weight of lysates from *Lactobacillus delbrueckii subsp. bulgaricus* with CFU/100g 3.00E+11;
0.3-6% by weight of lysates from *Lacticaseibacillus casei* with CFU/100g 6.00E+10;
1.5-15% by weight of lysates from *Lactobacillus plantarum* with CFU/100g 3.00E+11;
0.3-6% by weight of lysates from *Limosilactobacillus reuteri* with CFU/100g 6.00E+10;
1.5-15% by weight of *Lacticaseibacillus rhamnosus* lysates, with CFU/100g 3.00E+11;
25-70% by weight of *Saccharomyces cerevisiae* lysates with CFU/100g 1.10E+12;
1-15% by weight of *Streptococcus thermophilus* lysates with CFU/100g 3.00E+11.

In one embodiment of the invention, the postbiotic additive comprises
1-5% by weight of lysates from *Bacillus licheniformis* with CFU/100g 6.00E+10;
1-5% by weight of lysates from *Bacillus pumilus* with CFU/100g 4.50E+10;
1-5% by weight of lysates from *Bacillus subtilis* with CFU/100g 6.00E+10;
5-15% by weight of lysates from *Bifidobacterium animalis subsp. lactis* with CFU/100g 5.00E+11;
2-6% by weight of lysates from *Lactobacillus acidophilus* with CFU/100g 8.00E+10;
1-5% by weight of lysates from *Lactobacillus fermentum* with CFU/100g with CFU/100g 8.00E + 10;
2-6% by weight of lysates from *Lactobacillus delbrueckii subsp. bulgaricus* with CFU/100g 3.00E+11;
2-6% by weight of lysates from *Lacticaseibacillus casei* with CFU/100g 6.00E+10;
3% by weight of lysates from *Lactobacillus plantarum* with CFU/100g 3.00E+11;
3% by weight of lysates from *Limosilactobacillus reuteri* with CFU/100g 6.00E+10;
3% by weight of *Lacticaseibacillus rhamnosus* lysates, with CFU/100g 3.00E+11;
55% by weight of *Saccharomyces cerevisiae* lysates with CFU/100g 1.10E+12; 3% by weight of *Streptococcus thermophilus* lysates with CFU/100g 3.00E+11.

In a preferred embodiment of the invention, the postbiotic additive comprises
3%+025% by weight of lysates from *Bacillus licheniformis* with CFU/100g 6.00E+10;
3%+025% by weight of lysates from *Bacillus pumilus* with CFU/100g 4.50E+10;
3%+025% by weight of lysates from *Bacillus subtilis* with CFU/100g 6.00E+10;
   10%+025% by weight of lysates from *Bifidobacterium animalis subsp. lactis* with CFU/100g 5.00E+11;
4%+025% by weight of lysates from *Lactobacillus acidophilus* with CFU/100g 8.00E+10;
   3%+025% by weight of lysates from *Lactobacillus fermentum* with CFU/100g with CFU/100g 8.00E + 10;
   4%+025% by weight of lysates from *Lactobacillus delbrueckii subsp. bulgaricus* with CFU/100g 3.00E+11;
   3%+025% by weight of lysates from *Lacticaseibacillus casei* with CFU/100g 6.00E+10;
   3%+025% by weight of lysates from *Lactobacillus plantarum* with CFU/100g 3.00E+11;
   3%+025% by weight of lysates from *Limosilactobacillus reuteri* with CFU/100g 6.00E+10;
   3%+025% by weight of *Lacticaseibacillus rhamnosus* lysates, with CFU/100g 3.00E+11;
   55%+025% by weight of *Saccharomyces cerevisiae* lysates with CFU/100g 1.10E+12;
3%+025% by weight of *Streptococcus thermophilus* lysates with CFU/100g 3.00E+11.

Preferably, the lysates are dried powdered lysates, and preferably they are freeze-dried lysates.

The micro-organisms from whose cultures the lysates in the additive according to the present invention have been obtained are naturally present in common foods accepted for human consumption, as shown in the following non-exhaustive list:

| **Micro-organism** | **Food** |
|---|---|
| *Bacillus licheniformis* | soya, seafood, honey, starchy foodstuffs, food supplements (probiotics) |
| *Bacillus pumilus* | soya, honey, tubers, starchy foodstuffs, food supplements (probiotics) |
| *Bacillus subtilis* | soya, honey, tubers, starchy foodstuffs, food supplements (probiotics) |
| *Bifidobacterium animalis subsp. lactis* | fermented milk, yoghurt, cheese |
| *Lactobacillus acidophilus* | fermented milk, yoghurt, cheese, fermented cereal foods |
| *Lactobacillus fermentum* | fermented milk, yoghurt, cheese, fermented cereal foods, fermented vegetables, soya beans |
| *Lactobacillus delbrueckii subsp. bulgaricus* | fermented milk, yoghurt, cheese, fermented cereal foods, fermented vegetables, soya beans |
| *Lacticaseibacillus casei* | fermented milk, yoghurt, cheese, fermented cereal foods, fermented vegetables, soya beans |
| *Lactobacillus plantarum* | fermented milk, yoghurt, cheese, fermented cereal foods, fermented vegetables, soya beans |
| *Limosylactobacillus reuteri* | Soybeans, fermented cereal foods |
| *Lacticaseibacillus rhamnosus* | fermented milk, yoghurt, cheese, fermented meat |
| *Saccharomyces cerevisiae* | fermented cereal foods |
| *Streptococcus thermophilus* | fermented milk, yoghurt, cheese |

The main beneficial effects for humans attributed to these probiotic micro-organisms are as follows:

| **Micro-organism** | **Main beneficial effect on humans** |
|---|---|
| *Bacillus licheniformis* | It has anti-obesity and anti-diabetic properties. |
| *Bacillus pumilus* | It produces antimicrobial compounds and has immunomodulatory properties. |
| *Bacillus subtilis* | Stimulates immune system, controls Irritable Bowel Syndrome (IBS) |
| *Bifidobacterium animalis subsp. lactis* | Reduces fat accumulation, Regulates the immune system, Anti-inflammatory properties |
| *Lactobacillus acidophilus* | Helps prevent infection, Improves symptoms of Inflammatory Bowel Disease (IBD), Improves symptoms of atopic dermatitis |
| *Lactobacillus fermentum* | Stimulates the immune system, Reduces symptoms of IBS, acts on bacterial vaginosis |
| *Lactobacillus delbrueckii subsp. bulgaricus* | Acts on the Central Nervous System (CNS) (e.g. Depression) Relieves symptoms of IBD |
| *Lacticaseibacillus casei* | Relieves symptoms of rheumatoid arthritis, Improves symptoms of IBD and IBS |
| *Lactobacillus plantarum* | Strengthens the digestive system |
| *Limosylactobacillus reuteri* | Reduces dental plaque, inhibits Helicobacter pylori, stimulates the immune system, reduces intestinal permeability. |
| *Lacticaseibacillus rhamnosus* | Treats diarrhoea, intestinal health, IBS, lowers blood cholesterol, acts and prevents urinary tract infections, prevents allergies, fights tooth decay. |
| *Saccharomyces cerevisiae* | Fights *Clostridium difficile,* acts on *Helicobacter pilori* |
| *Streptococcus thermophilus* | Improves digestion, Helps treat various types of diarrhoea, Improves immunity |

The cereal flour-based food composition for preparing cereal flour-based products according to the invention comprises at least one cereal flour mixed with 0.25% to 6% by weight of the probiotic additive defined above. In one embodiment of the invention, the food composition comprises from 1% to 2% by weight of the probiotic additive mixed with the cereal flour.

Preferably, the cereal flour-based food composition comprises 1.5% by weight of the probiotic additive.

The cereal flour may comprise at least one flour selected from wheat flour, rye flour, maize flour, rye flour, oat flour, rice flour, sorghum flour, millet flour, triticale flour, and combinations thereof as well as chickpea flour.

The cereal flour-based product according to the invention is obtained with the cereal flour-based food composition defined in the above-described claim.

In one embodiment, the food composition has undergone a fermentation process.

The cereal flour product may be bread, such as artisan bread, or a bakery product.

The postbiotic additive according to the invention is easily integrated into cereal flour-based products and provides beneficial properties that are not usually present, or are usually present in small quantities, in conventional cereal flour-based food products, thus converting these food products into functional foods.

Furthermore, the post-biotic additive according to the invention is easily integrated into cereal flour-based products , without being affected by conventional processing methods for such cereal flour-based products, even when a fermentation step is used prior to baking since, comprising only lysates, it does not comprise live micro-organisms that could influence fermentation.

Moreover, the incorporation of the postbiotic additive does not change the organoleptic properties and shelf-life characteristics of cereal flour-based food products.

A further object of the invention relates to the use or method of use of the postbiotic food additive in foodstuffs obtained from cereal flour or chickpea flour, comprising bringing a mixture of lysates of probiotic micro-organisms described above into contact with cereal flour or chickpea flour during the production of confectionery, bakery and baked goods.

### EXAMPLES

In the following, aspects of the invention will be described on the basis of non-limiting examples.

### Example 1: Preparation of the postbiotic lysate composition

Separate batches of freeze-dried probiotics are prepared from the following cultures of micro-organisms:
- a 30g batch of a culture of *Bacillus licheniformis* (Weigmann 1898) with CFU/100g of 6.00E+10 marketed by by UNIQUE BIOTECH LIMITED (Hyderabad India );
- a 30g batch of a *Bacillus pumilus* (Meyer and Gottheil 1901) culture with CFU/100g of 4.50E+10 marketed by UNIQUE BIOTECH LIMITED (Hyderabad India);
- a 30g batch of a *Bacillus subtilis* (Ehrenberg 1835) culture with CFU/100g of 6.00E+10 marketed by UNIQUE BIOTECH LIMITED (Hyderabad India);
- a 100g batch of a culture of *Bifidobacterium animalis subsp. lactis* (Meile et al. 1997) with CFU/100g of 5.00E+11 marketed by the company AVANCES BIOQUÍMICOS ALlMENTACIÓN, S.L. (Tui, Spain) ;
- 1 a batch of 40g of a culture of *Lactobacillus acidophilus* (Moro 1900) with CFU/100g of 8.00E+10 marketed by the company AVANCES BIOQUÍMICOS ALlMENTACIÓN, S.L. (Tui, Spain);
- a batch of 30g of a culture of *Lactobacillus fermentum* (Beijerinck 1901) with CFU/100g of 8.00E + 10 marketed by the company AVANCES BIOQUÍMICOS ALlMENTACIÓN, S.L. (Tui, Spain);
- a batch of 40g of a culture of *Lactobacillus delbrueckii subsp. bulgaricus* (Orla-Jensen 1919) with CFU/100g of 3.00E+11 marketed by the company AVANCES BIOQUÍMICOSALlMENTACIÓN, S.L. (Tui, Spain);
- a batch of 30g of a culture of *Lacticaseibacillus casei* (Orla-Jensen 1916) with CFU/100g of 6.00E+10 marketed by the company AVANCES BIOQUÍMICOS ALlMENTACIÓN, S.L. (Tui, Spain);
- a batch of 30g of a culture of *Lactobacillus plantarum* (Orla-Jensen 1919) with CFU/100g of 3.00E+11 marketed by the company AVANCES BIOQUÍMICOS ALlMENTACIÓN, S.L. (Tui, Spain);
- a batch of 30g of a culture of *Limosilactobacillus reuteri* (Kandler et al. 1982) with CFU/100g of 6.00E+10 marketed by the company AVANCES BIOQUÍMICOS ALlMENTACIÓN, S.L. (Tui, Spain);
- a batch of 30g of a culture of *Lacticaseibacillus rhamnosus,* (Hansen 1968) with CFU/100g of 3.00E+11 marketed by the company AVANCES BIOQUÍMICOS ALlMENTACIÓN, S.L. (Tui, Spain);
- a batch of 550g of a culture of *Saccharomyces cerevisiae* (Desm., 1827) with CFU/100g of 1.10E+12 marketed by the company AVANCES BIOQUÍMICOS ALlMENTACIÓN, S.L. (Tui, Spain);
- a batch of 30g of a *Streptococcus thermophilus* (Orla-Jensen 1919) culture with CFU/100g of 3.00E+11 marketed by the company AVANCES BIOQUÍMICOS ALlMENTACIÓN, S.L. (Tui, Spain).

Each batch of probiotic culture is re-suspended in distilled water and subjected to a sterilisation cycle in an autoclave at 121°C for 20 minutes. Each batch of probiotic culture is then frozen at -20°C for 12 hours and thawed at room temperature the following day. The freezing and thawing is repeated twice. After the last thawing, the cells from the sterilised probiotic culture batch are subjected to a cell disruption treatment by sonication for 20 minutes at an output power of 500 W at 40% amplitude and 10 seconds pause, resulting in a mass of lysed cells from the probiotic batch. The mass of lysed cells is freeze-dried and subjected to grinding to obtain a batch of a lysate of the powdered probiotic micro-organism.

Batches of the probiotic micro-organism lysates are mixed in the following proportions to obtain 1kg of a postbiotic additive for bakery products, pastries and confectionery:
30g of *Bacillus licheniformis* lysate with CFU/100g 6.00E+10;
30g lysate from *Bacillus pumilus* with CFU/100g 4.50E+10;
   30g lysate from *Bacillus subtilis* with CFU/100g 6.00E+10;
   100g lysate from *Bifidobacterium animalis subsp. lactis* with CFU/100g 5.00E+11;
   40g lysate from *Lactobacillus acidophilus* with CFU/100g 8.00E+10;
   30g lysate from *Lactobacillus fermentum* with CFU/100g with CFU/100g 8.00E + 10;
   40g of lysate from *Lactobacillus delbrueckii subsp. bulgaricus* with CFU/100g 3.00E+11;
   30g of lysate from *Lacticaseibacillus casei* with CFU/100g 6.00E+10;
   30g lysate from *Lactobacillus plantarum* with CFU/100g 3.00E+11;
   30g of lysate from *Limosilactobacillus reuteri* with CFU/100g 6.00E+10;
   30g of lysate from *Lacticaseibacillus rhamnosus,* with CFU/100g 3.00E+11;
   550g of lysate from *Saccharomyces cerevisiae* with CFU/100g 1.10E+12;
   30g lysate from *Streptococcus thermophilus* with CFU/100g 3.00E+11.

### Example 2: Preparation of artisan bread

A conventional baking composition consisting of wheat, spelt wheat, durum wheat, whole wheat, whole rye, linseed, millet, poppy, sesame and sunflower flours, salt and anti-caking additives (E170) antioxidants and wheat enzyme is mixed with the postbiotic additive obtained according to example 1 in a ratio by weight of 98.5:1.5, resulting in a food composition comprising 1.5% by weight of the postbiotic composition.

The food composition comprises:
10000 g wholemeal rye flour
150 g postbiotic additive
500 g whole wheat flour
1000 g wheat flour

Water and wholemeal rye sourdough comprising baker's yeast with pH 4.6 to 4.9 as a fermentation starter are added to the food composition. The food composition is kneaded with a mixture of the following ingredients:
500 g yeast
500 g flaxseed, millet, poppy, sesame, sunflower seeds
100 g bran
1% additives (anti-caking agents, antioxidants and wheat enzyme, commonly used in bakery and confectionery products)
5000 ml water
to obtain a raw dough with a degree of hydration of 68-70%. Kneading is carried out in a conventional double arm mixer for at least 20 minutes at 24°C - 26°C. The raw dough is left to rest for at least 1 hour, after which it is divided into dough units, each of which has a mass of about 770g. The dough units are placed in 20x10x10cm moulds and fermented, again in a conventional manner for not less than 6 hours at a temperature of not less than 26°C.

After rising, the moulds with the dough units are baked, in a conventional manner, in a rotary oven for 45-55 minutes at 220-230°C. After baking, the resulting loaves are removed from the moulds and left to rest, allowing the loaves to cool and ventilate adequately, preventing the formation of steam, until a temperature below 30°C is reached. Each cooled loaf of bread is cut into 14 slices weighing approximately 35 g each and packaged in a plastic bag.

As can be seen, the method of preparing the bread is itself conventional.

### Example 3: Preparation of American muffins

American muffins are prepared with wheat flour, orange, cow's milk, virgin olive oil, sunflower oil, egg, sugar, sodium bicarbonate and the postbiotic composition obtained according to example 1.

A mixture of 140 g of wheat flour with 2 g of the postbiotic additive obtained according to example 1 is prepared to obtain the following food composition:

| | |
|---|---|
| Wheat flour | 1400 g |
| Postbiotic composition | 20 g |

A mixture of the following ingredients is prepared:

| | |
|---|---|
| Lemon juice | 5 lemons |
| Evaporated milk | 1250 ml |
| Sunflower oil | 500 g |
| Eggs | 20 g |
| Sugar | 2500 g |
| Yeast | 50 g |

In a mixer, sugar and egg white are beaten until the mixture turns white. the milk and oil are added and beaten for a further 10 minutes. To this whipped mixture is added the flour mixture and the postbiotic composition, and the resulting mixture is stirred for 1 hour to obtain a pourable mixture, which is left to stand for 10 minutes. Sodium bicarbonate is added to the pourable mixture and the resulting mixture is stirred for 10 minutes, after which the pourable mixture and the sodium bicarbonate are poured into capsules of 50 g each. The containers are placed in an oven and the pourable mixture is baked for 20 minutes at 230°C to obtain the muffins which are left to cool. The cooled muffins can be packaged for storage and distribution.

As you can see, the method of preparation of American muffins is itself conventional.

### Example 4: Characteristics of bread prepared according to example 2

Samples of the bread prepared according to example 2 were analysed and analysed for their nutritional composition. The results of the analysis are as follows:

| **Parameter** | **Result** | **Unit** | **Technique used** |
|---|---|---|---|
| Energy value | 1235 | KJ/100g | Numerical calculation |
| Energy value | 293 | Kcal/100g | Numerical calculation |
| Carbohydrates | 45 | g/100g | Numerical calculation |
| Total sugars | <1,0 | g/100g | Volumetry |
| Humidity | 34 | g/100g | Gravimetry |
| Proteins | 11 | g/100g | Volumetry |
| Ashes | 2,2 | g/100g | Gravimetry |
| Total fat | 7,5 | g/100g | Gravimetry |
| Saturated fatty acids | 1,1 | g/100g | Chromat CG FID |
| Polyunsaturated fatty acids | 4,3 | g/100g | Chromat CG FID |
| Monosaturated fatty acids | 2,1 | g/100g | Chromat CG FID |
| Sodium chloride (salt) | 1 | g/100g | Atomic absorption Flame |
| Sodium | 407,1 | mg/100g | Atomic absorption Flame |

The shelf life and expiry date of packaged samples of bread prepared according to example 2 were analysed. The results of the analysis are as follows:
No *Salmonella spp., Listeria monocytogenes, Enterobacteriaceae, Escherichia coli, and*
*Staphylococci coagulase* (+) were detected in the bread samples.

The organoleptic properties of the bread samples at room temperature (colour, odour, texture and general appearance) remained correct up to 9 days after packaging, being optimal for consumption and marketing.

At 25 days after packaging the initial pH of 5.47 of the bread samples dropped to pH 5.22 without interfering with the organoleptic properties. However, after 25 days after packaging, the consistency of the bread samples hardened which was considered somewhat unpalatable and after 18 days after packaging the values for aerobic microorganisms, mould and yeast content exceeded the values exceeded for this type of product.

It was concluded that the bread has a storage time at room temperature in its packaged state of 9 days without affecting its qualities and that, once the package is opened, it has a shelf life of 7 days.

These values correspond to the usual values for conventional artisan bread that does not include the postbiotic additive according to the invention, which confirms that the presence of the postbiotic additive, apart from providing the beneficial qualities, does not negatively affect the organoleptic properties or the preservation of the artisan bread that incorporates the additive.

### Example 5: Characteristics of American muffins prepared according to example 3

Samples of the American muffins prepared according to example 3 were analysed for their nutritional composition. The results of the analysis are as follows:

| **Parameter** | **Result** | **Unit** | **Technique used** |
|---|---|---|---|
| Energy value | 1777 | KJ/100g | Numerical calculation |
| Energy value | 425 | Kcal/100g | Numerical calculation |
| Carbohydrates | 47 | g/100g | Numerical calculation |
| Total sugars | 14 | g/100g | Volumetry |
| Humidity | 22 | g/100g | Gravimetry |
| Proteins | 5,6 | g/100g | Volumetry |
| Ashes | 1,4 | g/100g | Gravimetry |
| Total fat | 24 | g/100g | Gravimetry |
| Saturated fatty acids | 3,5 | g/100g | Chromat CG FID |
| Polyunsaturated fatty acids | 2,6 | g/100g | Chromat CG FID |
| Monosaturated fatty acids | 17,9 | g/100g | Chromat CG FID |
| Sodium chloride (salt) | 0,88 | g/100g | Atomic absorption Flame |
| Sodium | 353,8 | mg/100g | Atomic absorption Flame |

Samples of the American muffin prepared according to example 3 were analysed for shelf life and shelf life:
No micro-organisms of *Salmonella spp. Listeria monocytogenes, Enterobacteriaceae, Escherichia coli, and Staphylococci coagulase* (+) were detected in the American muffin.

The organoleptic properties of the muffin samples at room temperature (colour, odour, texture and general appearance) remained correct until 24 days after packaging, being optimal for consumption and marketing.

At 24 days after packaging the initial pH of 8.96 of the muffin samples dropped to pH 8.39 without interfering with the organoleptic properties. However, after 24 days after packaging, the muffin samples showed signs of dehydration which were considered somewhat unpalatable, and the values for aerobic micro-organisms, mould and yeast content exceeded the recommended values for this type of product.

It was concluded that the American muffin has a storage time at room temperature in the packaged state of 17 days without affecting its qualities and that, once the package is opened, it has a shelf life of 7 days.

These values correspond to those usual in the conventional American muffin not comprising the postbiotic additive according to the invention, which confirms that the presence of the said postbiotic additive, apart from providing the beneficial qualities, does not adversely affect the organoleptic properties or the preservation of the American muffin incorporating the said additive.

## Claims

1. A postbiotic food additive of foodstuffs obtained from cereal flour or chickpea flour, comprising a mixture of lysates of probiotic microorganisms, wherein the mixture of lysates comprises lysates of cultures of the following micro-organisms:
1-5% by weight of lysates from *Bacillus licheniformis* with CFU/100g 6.00E+10;
1-5% by weight of lysates from *Bacillus pumilus* with CFU/100g 4.50E+10;
1-5% by weight of lysates from *Bacillus subtilis* with CFU/100g 6.00E+10;
5-15% by weight of lysates from *Bifidobacterium animalis subsp. lactis* with CFU/100g 5.00E+11;
2-6% by weight of lysates from *Lactobacillus acidophilus* with CFU/100g 8.00E+10;
1-5% by weight of lysates from *Lactobacillus fermentum* with CFU/100g with 8.00E+10;
2-6% by weight of lysates from *Lactobacillus delbrueckii subsp. bulgaricus* with CFU/100g 3.00E+11;
2-6% by weight of lysates from *Lacticaseibacillus casei* with CFU/100g 6.00E+10;
3% by weight of lysates from *Lactobacillus plantarum* with CFU/100g 3.00E+11;
3% by weight of lysates from *Limosilactobacillus reuteri* with CFU/100g 6.00E+10;
3% by weight of lysates from *Lacticaseibacillus rhamnosus* with CFU/100g 3.00E+11;
55% by weight of lysates from *Saccharomyces cerevisiae* with CFU/100g 1.10E+12;
3% by weight of lysates from *Streptococcus thermophilus* with CFU/100g 3.00E+11.

2. A postbiotic additive, in accordance with claim 1, wherein comprising:
3%±025% by weight of lysates from *Bacillus licheniformis* with CFU/100g 6.00E+10;
3%±025% by weight of lysates from *Bacillus pumilus* with CFU/100g 4.50E+10;
3%±025% by weight of lysates from *Bacillus subtilis* with CFU/100g 6.00E+10;
10%±025% by weight of lysates from *Bifidobacterium animalis subsp. lactis* with CFU/100g 5.00E+11;
4%±025% by weight of lysates from *Lactobacillus acidophilus* with CFU/100g 8.00E+10;
3%±025% by weight of lysates from *Lactobacillus fermentum* with CFU/100g with 8.00E + 10;
4%±025% by weight of lysates from *Lactobacillus delbrueckii subsp. bulgaricus* with CFU/100g 3.00E+11;
3%±025% by weight of lysates from *Lacticaseibacillus casei* with CFU/100g 6.00E+10;
3%±025% by weight of lysates from *Lactobacillus plantarum* with CFU/100g 3.00E+11;
3%±025% by weight of lysates from *Limosilactobacillus reuteri* with CFU/100g 6.00E+10;
3%±025% by weight of lysates from *Lacticaseibacillus rhamnosus* with CFU/100g 3.00E+11;
55%±025% by weight of lysates from *Saccharomyces cerevisiae* with CFU/100g 1.10E+12;
3%±025% by weight of lysates from *Streptococcus thermophilus* with CFU/100g 3.00E+11.

3. A postbiotic food additive in accordance with claim 1, wherein the lysates are lyophilized.

4. Cereal flour-based food composition for the preparation of cereal flour-based foodstuffs, **characterised by** comprising at least one cereal flour mixed with 0,25% to 6% by weight of the postbiotic food additive defined in claim 1.

5. Food composition based on cereal flour, in accordance with claim 4, wherein comprising at least one cereal flour mixed with 1 % to 2% by weight of the postbiotic food additive defined in claim 1.

6. Food composition based on cereal flour, in accordance with claim 4 or 5, wherein comprising 1.5% by weight of the postbiotic food additive defined in claim 1.

7. Food product obtained from cereal flour, **characterized in that** it is obtained with the food composition based on cereal flour defined in claim 6, wherein the food composition has undergone a fermentation process.

8. Food product, in accordance with claim 7, wherein it is bread.

9. Food product, in accordance with claim 8, wherein bread is artisanal bread.

10. Food product, in accordance with claim 7, wherein it is a bakery product.

11. Food product, in accordance with claim 10, **characterized by** being an American muffin.

12. Use of a postbiotic food additive defined in claim 1 in a process of preparation of foodstuffs obtained from cereal flour or chickpea flour.

## Patentansprüche

1. Postbiotischer Nahrungsmittelzusatz für Lebensmittel, die aus Getreidemehl oder Kichererbsenmehl erhalten werden, umfassend ein Gemisch aus Lysaten probiotischer Mikroorganismen, wobei das Gemisch aus Lysaten Lysate von Kulturen der folgenden Mikroorganismen umfasst:
1-5 Gew.-% Lysate von *Bacillus licheniformis* mit KBE/100 g 6,00E+10;
1-5 Gew.-% Lysate von *Bacillus pumilus* mit KBE/100 g 4,50E+10;
1-5 Gew.-% Lysate von *Bacillus subtilis* mit KBE/100 g 6,00E+10;
5-15 Gew.-% Lysate von *Bifidobacterium animalis subsp. lactis* mit KBE/100 g 5,00E+11;
2-6 Gew.-% Lysate von *Lactobacillus acidophilus* mit KBE/100 g 8,00E+10;
1-5 Gew.-% Lysate von *Lactobacillus fermentum* mit KBE/100 g mit 8,00E+10;
2-6 Gew.-% Lysate von *Lactobacillus delbrueckii subsp. bulgaricus* mit KBE/100 g 3,00E+11;
2-6 Gew.-% Lysate von *Lacticaseibacillus casei* mit KBE/100 g 6,00E+10;
3 Gew.-% Lysate von *Lactobacillus plantarum* mit KBE/100 g 3,00E+11;
3 Gew.-% Lysate von *Limosilactobacillus reuteri* mit KBE/100 g 6,00E+10;
3 Gew.-% Lysate von *Lacticaseibacillus rhamnosus* mit KBE/100 g 3,00E+11;
55 Gew.-% Lysate von *Saccharomyces cerevisiae* mit KBE/100 g 1,10E+12;
3 Gew.-% Lysate von *Streptococcus thermophilus* mit KBE/100 g 3,00E+11.

2. Postbiotischer Zusatz nach Anspruch 1, wobei Folgendes umfasst ist:
3 ± 025 Gew.-% Lysate von *Bacillus licheniformis* mit KBE/100 g 6,00E+10;
3 ± 025 Gew.-% Lysate von *Bacillus pumilus* mit KBE/100 g 4,50E+10;
3 ± 025 Gew.-% Lysate von *Bacillus subtilis* mit KBE/100 g 6,00E+10;
10 ± 025 Gew.-% Lysate von *Bifidobacterium animalis subsp. lactis* mit KBE/100 g 5,00E+11;
4 ± 025 Gew.-% Lysate von *Lactobacillus acidophilus* mit KBE/100 g 8,00E+10;
3 ± 025 Gew.-% Lysate von *Lactobacillus fermentum* mit KBE/100 g mit 8,00E+10;
4 ± 025 Gew.-% Lysate von *Lactobacillus delbrueckii subsp. bulgaricus* mit KBE/100 g 3,00E+11;
3 ± 025 Gew.-% Lysate von *Lacticaseibacillus casei* mit KBE/100 g 6,00E+10;
3 ± 025 Gew.-% Lysate von *Lactobacillus plantarum* mit KBE/100 g 3,00E+11;
3 ± 025 Gew.-% Lysate von *Limosilactobacillus reuteri* mit KBE/100 g 6,00E+10;
3 ± 025 Gew.-% Lysate von *Lacticaseibacillus rhamnosus* mit KBE/100 g 3,00E+11;
55 ± 025 Gew.-% Lysate von *Saccharomyces cerevisiae* mit KBE/100 g 1,10E+12;
3 ± 025 Gew.-% Lysate von *Streptococcus thermophilus* mit KBE/100 g 3,00E+11.

3. Postbiotischer Nahrungsmittelzusatz nach Anspruch 1, wobei die Lysate lyophilisiert sind.

4. Lebensmittelzusammensetzung auf Getreidemehlbasis zur Herstellung von Lebensmitteln auf Getreidemehlbasis, **dadurch gekennzeichnet, dass** sie mindestens ein Getreidemehl umfasst, das mit 0,25 bis 6 Gew.-% des in Anspruch 1 definierten postbiotischen Nahrungsmittelzusatzes vermischt ist.

5. Lebensmittelzusammensetzung basierend auf Getreidemehl nach Anspruch 4, wobei sie mindestens ein Getreidemehl umfasst, das mit 1 bis 2 Gew.-% des in Anspruch 1 definierten postbiotischen Nahrungsmittelzusatzes vermischt ist.

6. Lebensmittelzusammensetzung basierend auf Getreidemehl nach Anspruch 4 oder 5, wobei sie 1,5 Gew.-% des in Anspruch 1 definierten postbiotischen Nahrungsmittelzusatzes umfasst.

7. Lebensmittelprodukt, das aus Getreidemehl erhalten wird, **dadurch gekennzeichnet, dass** es mit der in Anspruch 6 definierten Lebensmittelzusammensetzung basierend auf Getreidemehl erhalten wird, wobei die Lebensmittelzusammensetzung einem Fermentationsprozess unterzogen wurde.

8. Lebensmittelprodukt nach Anspruch 7, wobei es Brot ist.

9. Lebensmittelprodukt nach Anspruch 8, wobei das Brot Handwerksbrot ist.

10. Lebensmittelprodukt nach Anspruch 7, wobei es ein Backwarenprodukt ist.

11. Lebensmittelprodukt nach Anspruch 10, **dadurch gekennzeichnet, dass** es ein amerikanischer Muffin ist.

12. Verwendung eines in Anspruch 1 definierten postbiotischen Nahrungsmittelzusatzes bei einem Prozess zur Herstellung von Lebensmitteln, die aus Getreidemehl oder Kichererbsenmehl erhalten werden.

## Revendications

1. Additif alimentaire postbiotique de denrées alimentaires obtenues à partir de farine de céréales ou de pois chiches, comprenant un mélange de lysats de micro-organismes probiotiques, dans lequel le mélange de lysats comprend des lysats de cultures des micro-organismes suivants :
de 1 à 5 % en poids de lysats de *Bacillus licheniformis* avec UFC/100 g 6,00E+10 ;
de 1 à 5 % en poids de lysats de *Bacillus pumilus* avec UFC/100 g 4,50E+10 ;
de 1 à 5 % en poids de lysats de *Bacillus subtilis* avec UFC/100 g de 6,00E+10 ;
de 5 à 15 % en poids de lysats de *Bifidobacterium animalis subsp. lactis* avec UFC/100 g 5,00E+11 ;
de 2 à 6 % en poids de lysats de *Lactobacillus acidophilus* avec UFC/1 00 g 8,00E+10 ;
de 1 à 5 % en poids de lysats de *Lactobacillus fermentum* avec UFC/100 g avec 8,00E+ +10 ;
de 2 à 6 % en poids de lysats de *Lactobacillus delbrueckii subsp. bulgaricus* avec UFC/100 g 3,00E+11 ;
de 2 à 6 % en poids de lysats de *Lacticaseibacillus casei* avec UFC/100 g 6,00E+10 ;
3 % en poids de lysats de *Lactobacillus plantarum* avec UFC/100 g 3,00E+11 ;
3 % en poids de lysats de *Limosilactobacillus reuteri* avec UFC/100 g de 6,00E+10 ;
3 % en poids de lysats de *Lacticaseibacillus rhamnosus* avec UFC/100g 3,00E+11 ;
55 % en poids de lysats de *Saccharomyces cerevisiae* avec UFC/100 g 1,10E+12 ;
3 % en poids de lysats de *Streptococcus thermophilus* avec UFC/100 g 3,00E+11.

2. Additif postbiotique, selon la revendication 1, dans lequel il comprend :
3 %±025 % en poids de lysats de *Bacillus licheniformis* avec UFC/100 g 6,00E+10 ;
3 %±025 % en poids de lysats de *Bacillus pumilus* avec UFC/100 g 4,50E+10 ;
3 %±025 % en poids de lysats de *Bacillus subtilis* avec UFC/100 g de 6,00E+10 ;
10 %±025 % en poids de lysats de *Bifidobacterium animalis subsp. lactis* avec UFC/100 g 5,00E+11 ;
4 %±025 % en poids de lysats de *Lactobacillus acidophilus* avec UFC/100 g 8,00E+10 ;
3 %±025 % en poids de lysats de *Lactobacillus fermentum* avec UFC/100 g avec 8,00E + 10 ;
4 %±025 % en poids de lysats de *Lactobacillus delbrueckii subsp. bulgaricus* avec UFC/100 g 3,00E+11 ;
3 %±025 % en poids de lysats de *Lacticaseibacillus casei* avec UFC/100 g 6,00E+10 ;
3 %±025 % en poids de lysats de *Lactobacillus plantarum* avec UFC/100 g 3,00E+11 ;
3 %±025 % en poids de lysats de *Limosilactobacillus reuteri* avec UFC/100 g 6,00E+10 ;
3 %±025 % en poids de lysats de *Lacticaseibacillus rhamnosus* avec UFC/100 g 3,00E+11 ;
55 %±025 % en poids de lysats de *Saccharomyces cerevisiae* avec UFC/100 g 1,10E+12 ;
3 %±025 % en poids de lysats de *Streptococcus thermophilus* avec UFC/100 g 3,00E+11.

3. Additif alimentaire postbiotique selon la revendication 1, dans lequel les lysats sont lyophilisés.

4. Composition alimentaire à base de farine de céréales pour la préparation de denrées alimentaires à base de farine de céréales, **caractérisée en ce qu'**elle comprend au moins une farine de céréales mélangée avec 0,25 % à 6 % en poids de l'additif alimentaire postbiotique défini dans la revendication 1.

5. Composition alimentaire à base de farine de céréales, selon la revendication 4, dans laquelle elle comprend au moins une farine de céréales mélangée à 1 % à 2 % en poids de l'additif alimentaire postbiotique défini dans la revendication 1.

6. Composition alimentaire à base de farine de céréales, conformément à la revendication 4 ou 5, dans laquelle elle comprend 1,5 % en poids de l'additif alimentaire postbiotique défini dans la revendication 1.

7. Produit alimentaire obtenu à partir de farine de céréales, **caractérisé en ce qu'**il est obtenu avec la composition alimentaire à base de farine de céréales définie dans la revendication 6, dans lequel la composition alimentaire a subi un processus de fermentation.

8. Produit alimentaire, selon la revendication 7, dans lequel c'est du pain.

9. Produit alimentaire, selon la revendication 8, dans lequel le pain est un pain artisanal.

10. Produit alimentaire, selon la revendication 7, dans lequel c'est un produit de boulangerie.

11. Produit alimentaire, selon la revendication 10, **caractérisé en ce qu'**il est un muffin américain.

12. Utilisation d'un additif alimentaire postbiotique défini dans la revendication 1 dans un processus de préparation de denrées alimentaires obtenus à partir de farine de céréales ou de farine de pois chiches.
